Europäisches Patentamt

**European Patent Office**

**Office européen des brevets**

(11) Publication number: **0 265 984 B1**

## EUROPEAN PATENT SPECIFICATION

(45) Date of publication of patent specification: **15.04.92**

(51) Int. Cl.5: **G11B 7/007**, G11B 7/26, G11B 20/06, G11B 23/00, G11B 27/30

(21) Application number: **87201902.1**

(22) Date of filing: **05.10.87**

(54) **Optically readable record carrier for recording information, method and apparatus for manufacturing such a record carrier, apparatus for recording information on such a record carrier, and apparatus for reading information recorded on such a record carrier.**

(30) Priority: **06.10.86 NL 8602504**
**20.03.87 NL 8700655**

(43) Date of publication of application:
**04.05.88 Bulletin 88/18**

(45) Publication of the grant of the patent:
**15.04.92 Bulletin 92/16**

(84) Designated Contracting States:
**BE DE ES FR GB IT NL SE**

(56) References cited:
EP-A- 0 166 199     EP-A- 0 265 695
GB-A- 2 069 219     GB-A- 2 145 855
US-A- 3 963 962     US-A- 4 067 044
US-A- 4 150 398

PATENT ABSTRACTS OF JAPAN, vol. 3, no. 90 (E-127), 31st July 1979; & JP-A-54 68 610

PATENT ABSTRACTS OF JAPAN, vol. 8, no. 199 (P-380)[1922], 16th August 1985; & JP-A-60 63 733

(73) Proprietor: **N.V. Philips' Gloeilampenfabrieken**
**Groenewoudseweg 1**
**NL-5621 BA Eindhoven(NL)**

(72) Inventor: **Raaymakers, Wilhelmus Petrus Maria**
**c/o INT. OCTROOIBUREAU B.V. Prof. Holstlaan 6**
**NL-5656 AA Eindhoven(NL)**
Inventor: **Kuijpers, Franciscus Lambertus Johannus Maria**
**c/o INT. OCTROOIBUREAU B.V. Prof. Holstlaan 6**
**NL-5656 AA Eindhoven(NL)**
Inventor: **Veenis, Aartje Willemina**
**c/o INT. OCTROOIBUREAU B.V. Prof. Holstlaan 6**
**NL-5656 AA Eindhoven(NL)**

Rank Xerox (UK) Business Services

PATENT ABSTRACTS OF JAPAN, vol. 8, no. 92 (P-271)[1529], 27th April 1984; & JP-A-59 5449

Inventor: **Pasman, Johannes Hermanus Theodorus**
**c/o INT. OCTROOIBUREAU B.V. Prof. Holstlaan 6**
**NL-5656 AA Eindhoven(NL)**
Inventor: **Mulder, Hendricus Antonius Maria**
**c/o INT. OCTROOIBUREAU B.V. Prof. Holstlaan 6**
**NL-5656 AA Eindhoven(NL)**

74 Representative: **Peters, Rudolf Johannes et al**
**INTERNATIONAAL OCTROOIBUREAU B.V.**
**Prof. Holstlaan 6**
**NL-5656 AA Eindhoven(NL)**

## Description

The invention relates to a optically readable record carrier comprising a radiation sensitive recording layer upon a disc-shaped substrate being provided with a continuous track of constant width arranged in accordance with a spiral or concentric track pattern which record carrier is intended for the recording of information along the track with a substantial constant linear velocity, which track exhibits a periodic radial wobbling having a substantial constant spatial frequency.,

The invention further relates to an apparatus used in manufacturing a record carrier, comprising a writing device for writing the track pattern on a carrier provided with a radiation sensitive layer by means of a radiation beam, a deflection device for deflecting the radiation beam in radial direction in response to a control signal, a device for generating as the control signal a periodic signal so as to obtain a track wobble whose frequency corresponds to the frequency of the periodic signal.

The invention further relates to an apparatus for recording information on a record carrier, comprising means for scanning the record carrier along the track by means of a writing radiation beam for recording in the scanned part of the record carrier a pattern of recording marks corresponding to an information signal, a optical system with a detctor for detecting the radiation reflected or transmitted by the record carrier during scanning, and which detector is sensitive to the modulation of the radiation beam produced by the radial wobble.

The invention also relates to a apparatus for reading a record carrier on which record carrier an information pattern is recorded along the track, comprising a scanning device for scanning the information pattern with a substantially constant velocity by means of a radiation beam, an optical system with a detector for detecting the radiation reflected or transmitted by the record carrier during scanning, the detector having a first section with an increased sensitivity for the modulation of the radiation beam produced by the radial wobble of the track, the detector having a second section with an increased sensitivity to a modulation of the radiation beam produced by the information pattern recorded along the track.

Such a record carrier and such apparatuses are known from the Applicant's German Offenlegungsschrift No. 3100421.

The known record carrier has a spiral track which exhibits a track modulation of constant frequency. As the spiral track is scanned by means of the radiation beam during reading and/or recording this track modulation produces a modulation of the radiation beam. This modulation is detected and from the modulation thus detected a clock signal is derived which is utilized for controlling the recording and/or reading process.

Further, the spiral track is provided with information recording areas between which synchronisation areas are interposed. The information recording areas are intended for the recording of information. The synchronisation areas contain position information in the form of the address of the adjacent information recording area. The position information in the synchronisation areas makes it possible to determine which part of the record carrier is being scanned from the reflected radiation beam during scanning. This enables a specific part of the disc to be located rapidly and accurately.

However, the known record carrier has the disadvantage that the information recording areas are constantly interrupted by synchronisation areas. This is a drawback in particular when it is desired that the information recorded on the record carrier meets the requirements as set in the Compact Disc Standard. In that case it is required that the information signals are recorded uninterruptedly and with a constant linear velocity.

It is the object of the invention to provide means which make it possible to record uninterrupted EFM encoded signals, which during scanning make it possible to determine which part of the disc is being scanned from the light beam reflected by the record carrier, and which make it possible to control the scanning velocity during recording to a substantial contant linear velocity, so as to obtain a recording on a recordable record carrier which is compatible with the recording on a Compact Disc of the read-only type.

In accordance with a first aspect of the invention a record carrier of the type defined in the opening paragraph is characterized in that the spatial frequency of the track wobbling is modulated with a digital position information signal, which position information does not exhibit strong frequency components in the low frequency range.

In accordance with a second aspect of the invention an apparatus for manufacturing the record carrier is characterized in that the apparatus comprising frequency modulating means for frequency modulating the periodic signal with a digital position information signal, which position information signal does not exhibit strong frequency components in the low frequency range.

In accordance with a third aspect of the invention an apparatus for recording information on a record carrier as defined in the foregoing is characterized in that the recording apparatus comprises an FM demodulation device coupled to the detector for recovering the position information signal from an output signal of the detector, and means for controlling the scanned speed in dependence on the output signal and a reference signal indicating a reference frequency, so as to maintain the mean value of the frequency of the output signal substantially equal to the reference frequency.

In accordance with a fourth aspect of the invention an apparatus for reading information on a record carrier of the type defined in the foregoing is characterized in that the reading apparatus comprises an FM demodulation device coupled to the first section of the detector for recovering the position information signal from an output signal of the said first section.

While scanning the track with a radiation beam during recording or reading the position information signal can be derived by FM-demodulation from the FM modulated signal caused by the track modulation in the beam reflected or transmitted by the record carrier. Due to the fact that the position information signal does not exhibit strong frequency components in the low frequency range, the mean frequency of the FM modulated signal is indicative for the linear scanning velocity so that it can be used for the control of the linear scanning velocity.

It is to be noted that EP-A 0 166 199 discloses an optical record carrrier of a recordable type provided with a servo track used for guiding the recording beam during recording. The servo track exhibit a track width modulation representing address information. During recording this address information can be recovered on basis of modulation caused by the track modulation in the recording beam.

However the use of an information signal without low frequency components in order to enable scanning velocity control is not disclosed in EP-A-0 166 199.

Further US 3.963.862 discloses an optical record carrier of a read only type. The record carrier is provided with a wobbling information track. The frequency of the wobbling is modulated in accordance with the luminance information of a TV signal. Since the luminance information of a TV signal exhibit strong low frequency components, the track wobbling cannot be used for scanning velocity control.

Finally, it is remarked, that EP-A-0 265 695, which is a prior art document according to Art. 54-(3) EPC, describes an optical record carrier of a recordable type which is provided with a wobbling servo track. The track wobbling represents a binary address signal. A "0"-bit of the address signal is represented by a track part with a constant spatial frequency. A "1" bit of the address signal is represented by a track part with a wobbling pattern which differs from the pattern representing a "0"-bit. There does not exist a relation between the instantaneous logic value of the binary address signal and the instantaneous frequency of the wobble as there exists for a FM-modulation. Moreover the binary address signal may comprise strong low frequency components, because this binary signal is not DC-free.

A further embodiment of the record carrier is characterized in that the track is constituted by substantially spiral-shaped or concentric ridges of substantially constant width, which ridges exhibit the radial wobble.

A further embodiment of the record carrier is characterized in that the width of the ridges is larger than the average width of the intermediate grooves. When an information structure formed on the ridges is read the influence of any irregularly shaped edges of the ridges, which irregularities may give rise to additional noise, is then minimal.

Such a record carrier having a ridge-like track of constant width can be manufactured by means of a method of manufacturing a record carrier, a master disc provided with a track pattern being obtained by scanning a substrate provided with a radiation sensitive layer with a radiation beam along substantially concentric or spiral-shaped paths which exhibit a radial wobble, the scanned portions of the radiation sensitive layer being removed by subsequently developing the radiation sensitive layer of the substrate, characterized in that the information layer is scanned along a path which is the complement of the desired path of the track on the record carrier to be manufactured, the record carrier with a track pattern which is the complement of the track pattern on the master disc being manufactured staring from the master disc.

In the above method of manufacturing record carriers having a track pattern of ridges of constant width the upper sides of the ridges corresponds to the bottoms of the grooves on the master disc. The bottoms of the grooves are constituted by the highly smooth surface of the substrate of the master disc, so that the corresponding upper sides of the ridges on the finished record carrier are also very smooth, resulting in a very satisfactory reflection. Thus, during reading of an information structure formed on the upper sides of the ridges a high signal level and hence a satisfactory signal-to-noise are obtained.

Embodiments of the invention and further advantages thereof will now be described in more detail, by way of example, with reference to Figures 1 to 8, in which

Figure 1 shows an apparatus in accordance with the invention for manufacturing a record carrier,

Figure 2 shows a signal Ip generated in the apparatus shown in Figure 1,

Figure 3 shows the frequency spectrum of the signal Ip in Figure 2,

Figure 4 shows a record carrier in accordance with the invention,

Figure 5 shows an apparatus in accordance with the invention for recording an information signal,

Figure 6 shows an apparatus in accordance with the invention for reading an information signal, and

Figures 7a, 7b and 8 show another embodiment of the record carrier in accordance with the invention.

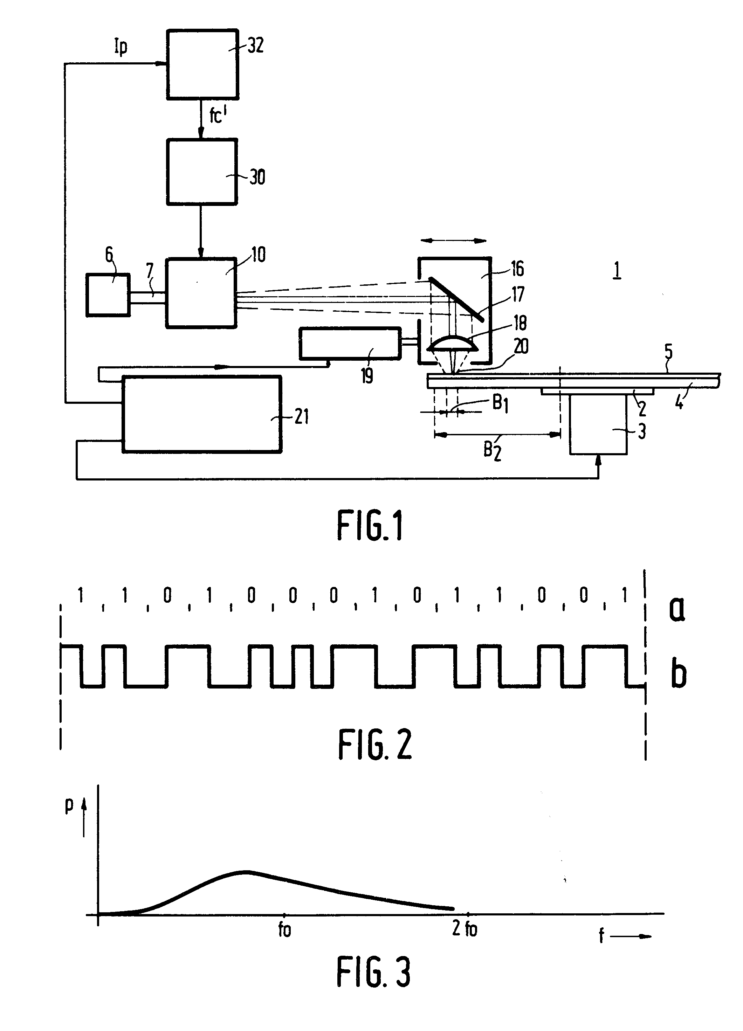

Figure 1 shows an apparatus for manufacturing a record carrier in accordance with the invention. The apparatus 1 comprises a turntable 2 which is rotated by a drive means 3. A disc-shaped substrate 4, for example a flat glass plate with a light-sensitive layer 5, for example in the form of a photoresist, can be placed on the turntable 2.

A laser 6 produces a light beam 7 which is projected on the light-sensitive layer 5. The light beam 7 is first passed through a deflection device 10. The deflection device 10 is of a type by means of which a light beam can be deflected very accurately within a narrow range. The apparatus described herein suitably employs an acousto-optical deflection device. However, it is alternatively possible to use other deflection devices, such as for example a mirror which is pivotable through a small angle, or an electro-optical deflection device. The dashed line in Figure 1 indicates the limits of the deflection range. The light beam 7 deflected by the deflection device 10 is directed to an optical head 16. The optical head comprises a mirror 17 and an objective 18 for focussing the light beam on the light-sensitive layer 5. The optical head is radially movable relative to the rotating substrate 4 by means of an actuator device 19.

By means of the optical system described above the light beam 7 is focussed on a scanning point 20 on the light-sensitive layer 5, the position of this scanning point 20 being determined by the degree of deflection of the light beam 7 caused by the deflection device 10 and the radial position of the optical head 16 relative to the substrate 4. In the shown position of the optical head 16 the deflection device 10 can deflect the scanning point 20 within a range indicated by B1. For this deflection range the scanning point 20 can be moved over a range indicated by B2 by means of the optical head 16.

Further the apparatus 1 comprises a voltage-controlled oscillator 30, which generates a control signal for the acoustic modulator 10. The acoustic modulator 10 is of a customary type which deflects the light beam through an angle which is determined by the frequency of the control signal supplied b y the voltage-controlled oscillator 30. A frequency modulator 32, for example a voltage-controlled oscillator, generates a signal whose frequency fc' is modulated with a position-information signal Ip generated by a control device 21. The control device 21 further controls the speed of the drive means 3 and the speed of the actuating device 19 in such a way that the radiation beam 7 scans the light-sensitive layer with a constant velocity along a spiral track. This control system falls beyond the scope of the present invention and is therefore not described in further detail.

The position-information signal Ip is formed by a binary signal consisting of a sequence of bit cells having a logic value "1" or "0", which signal represents a sequence of digital time-information codes. These time-information words always indicate the time expired since the beginning of the scanning operation. An example of such a signal Ip is shown in Figure 2b, a part of the time-information word represented by the signal Ip being shown in Figure 2a. The position-information signal Ip exhibits a "biphase" modulation. The applied digital signal is then converted into a binary signal which is positive during the time interval $T/2$ for a logic "one" of the applied digital signal and which is negative during the next time internal $T/2$, T being the bit period of the applied digital signal. A logic "zero" results in the opposite binary signal, i.e. one which is negative during the time interval $\overline{T/2}$ and positive during the next time interval $T/2$. This modulation technique yields a binary signal having a power-distribution frequency spectrum as shown in Figure 3. Here the frequency fo corresponds to $1/T$.

As is apparent from Figure 3, such a "biphase" modulated signal does not exhibit strong frequency components in the low-frequency range. The advantages of this will be described comprehensively hereinafter.

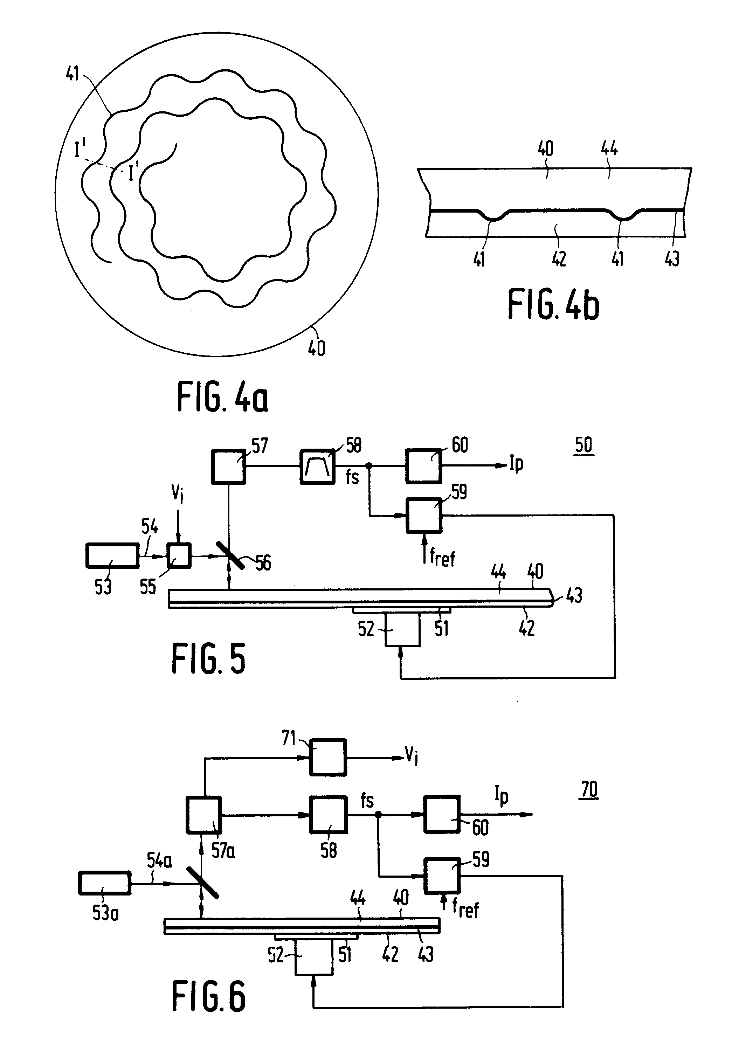

By means of the apparatus shown in Figure 1 the light-sensitive layer 5 is scanned along a spiral path. Moreover, the scanning point 20 is moved to and fro over a small distance within the range B1 at a frequency corresponding to the frequency fc' of the output signal of the frequency modulator 32. As a result of this, the spiral path described by the scanning point 20 on the light-sensitive layer 5 exhibits a radial excursion whose frequency is modulated with the time-information signal Ip. The light-sensitive layer 5 thus scanned, which layer consists of a photoresist, is subsequently developed to remove the portions of the radiation-sensitive layer scanned by the light beam b, yielding a master disc in which a spiral groove $\overline{w}$ith a radial frequency-modulated excursion (wobble) is formed. Subsequently, replicas are made of this master disc, which replicas are provided with a radiation-sensitive information layer. Figure 4 shows a record carrier 40 in accordance with the invention, manufactured as described in the foregoing.

Figure 4a is a plan view of the record carrier 40. The record carrier 40 exhibits a track pattern comprising a spiral groove 41 of constant width provided with the radial wobble. For the sake of clarity the pitch of the spiral and the radial wobble are strongly exaggerated. In reality, the pitch of the consecutive turns of the spiral path is generally of the order of magnitude of 1 to 2 um. In practice the period is suitably such that during reading of an information signal recorded on the record carrier the frequency components produced in the read signal by the radial wobble are situated substantially outside the frequency spectrum of the information signal to be recorded and/or read. If an EFM encoded signal in conformity with the customary "Compact Disc" standard is recorded a radial wobble causing frequency components near 22 kHz in the red signal with a frequency excursion of 1.5 kHz proves to be adequate. The recorded EFM encoded signal and the radial wobble then hardly influence one another.

Figure 4b is a sectional view I-I of the record carrier 40 comprising a substrate 42, a radiation-sensitive information layer 43, and a transparent coating 44.

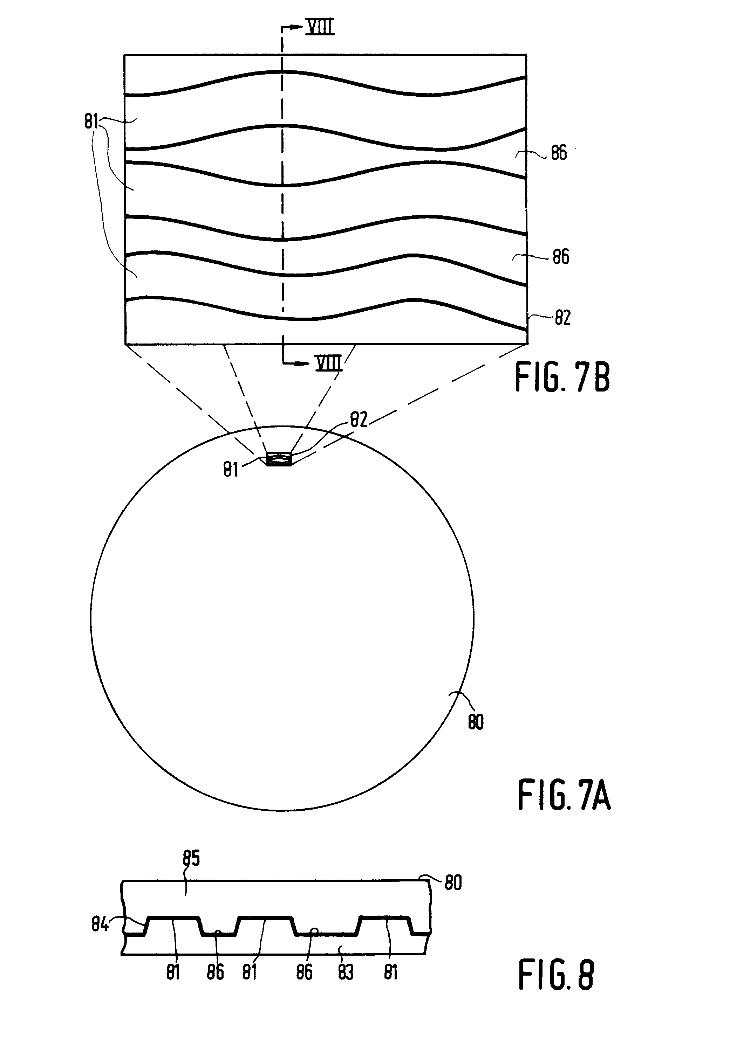

The record carrier shown in Figure 4 exhibits a track pattern constituted by a spiral-shaped groove of constant width. In such an information carrier the information to be recorded is provided in the groove. However, in practice it has been found that a better signal-to-noise ratio can be obtained if use is made of a record carrier having a track pattern consisting of spiral-shaped or concentric ridges of constant width, on which ridges the information is recorded. Such a record carrier 80 is shown in Figure 7a and 7b. The information tracks in the form of ridges 81 are shown only diagrammatically in Figure 7a for an area 82 which is shown to a highly enlarged scale in Figure 7b. Figure 8 is a sectional view taken on the line VIII-VIII within the area 82 of the record carrier 80 which comprises a substrate 83, a radiation-sensitive layer 84, and a transparent coating 85.

Since in the record carrier 80 the diameter of the grooves 86 interposed between the ridges 81 is not constant as a result of the frequency-modulated radial excursion of the ridges 81, the method of manufacturing differs from the method for manufacturing record carriers having a track pattern comprising grooves of constant width as described with reference to Figure 1.

Such a track pattern of ridges of constant width can be obtained by using a method which bears much resemblance to the method described with reference to Figure 1. However, in the present case the light-sensitive layer 4 should not consist of a positive photoresist but of a negative photoresist. When a layer consisting of such a negative photoresist is developed the non-exposed portions of the photoresist are removed instead of the exposed portions, as is the case with the customary positive photoresist, after which a master disc which exhibits the desired track pattern of ridges is obtained, of which copies can be made in the customary manner.

However, a record carrier with a track pattern of ridges of constant width can also be obtained if use is made of a substrate 4 with a light-sensitive layer 4 consisting of the customary positive photoresist, the exposed portions of the layer being removed during development. In that case the substrate 4 is provided with a track pattern or grooves of constant width which is the complement of the desired track pattern of ridges of constant width. The winding sense of such a complementary track pattern of grooves is opposite to that of the desired track pattern. Thus, to obtain a substrate with a complementary track pattern it is merely necessary to select the direction of rotation during scanning of the substrate 4 so as to be opposite to the direction of rotation desired during reading of the record carrier 80. The process of scanning the substrate 4 can then be controlled in the same way as described with reference to Figure 1.

After scanning during development of the light-sensitive layer 5 the scanned portions of the layer are removed again, yielding a master disc with the complementary track pattern. The master disc thus obtained, and any copies thereof, may be used as a negative for the manufacture of the record carrier 80 with a track pattern comprising ridges of constant width.

In the last-mentioned method of manufacturing record carriers with a track pattern of ridges the upper sides of the ridges on the record carrier thus manufactured correspond to the bottoms of the grooves in the master disc. The bottoms of the grooves are constituted by the very smooth surface of the substrate 4, which substrate 4 generally consists of glass. As a result of this, the corresponding upper side of the finished record carrier is also very smooth, which results in a very high reflection, yielding a high signal level and, consequently, a satisfactory signal-to-noise ratio during reading.

An even better signal-to-noise ratio can be obtained if the ridges of constant width on the record carriers are broad relative to the intermediate grooves. The influence of any irregularly formed edges of the ridge, which may give rise to an additional noise during reading, is then minimal.

Figure 5 shows an apparatus 50 in accordance with the invention for recording an information signal Vi on the record carrier 40. The apparatus 50 comprises a drive means 52 for rotating the record carrier 40 which is placed on a turntable 51. A radiation source 53 produces a radiation beam 54 for scanning the groove 41. The radiation beam 54 is then directed towards the record carrier 40 via a modulation device 55 and a semitransparent mirror 56. By means of the modulation device 55 the intensity of the beam 54 can be modulated depending on an information signal Vi to be recorded, in such a way that an optically detectable information pattern is formed in the information layer 43 at the location of the groove 41. The modulated beam 54 is then partly reflected by the information layer 43. The reflected beam is detected by means of a detection circuit 57. The detection circuit 57 generates an output signal containing frequency components produced by the radial wobble. This output signal is filtered by a band-pass filter 58 which mainly transmits the frequency components caused by the radial wobble. The instantaneous frequency fs of this output signal is employed as a measurement signal for the velocity with which the record carrier is scanned by the beam 54 (scanning velocity). This output signal of the band-pass filter 58 is applied to a control circuit 59 for generating a control signal for the drive means 52. The control circuit 59 controls the speed of rotation of the record carrier 40 via the drive means 52 so as to maintain the instantaneous frequency fs substantially equal to a reference frequency fref. The control loop thus formed for controlling the scanning velocity of the record carrier has a limited bandwidth, so that rapid frequency variations of the instantaneous frequency fs with frequency components outside this limited bandwidth do not affect the control process. As already described, in the apparatus 1 for manufacturing the record carrier the frequency of the radial wobble is modulated with a position-information signal Ip which does not exhibit any strong frequency components in the low-frequency range. If the frequency band used for scanning-velocity control and the frequency spectrum of the position-information signal are adapted to one another in such a way that hardly any frequency components of this frequency spectrum are situated within this frequency band, the applied FM modulation of the radial wobble will not affect the controlled scanning velocity.

Satisfactory results when recording EFM encoded signals in conformity with the CD-standard have been obtained for an fref of approximately 22 kHz, a bit frequency of the position-information signal of approximately 3000 bits/second, and a velocity-control bandwidth of approximately 100 Hz.

The position-information signal Ip is recovered from the output signal of the filter 58 by means of an FM demodulation circuit 60. This position-information signal Ip indicates the position of the scanned portion of the groove 42 relative to the beginning of the groove expressed in playing time. This position-information signal Ip may be used inter alia for locating the track portion in which an information signal to be recorded is to be stored. Locating this portion falls beyond the scope of the present invention and is therefore not described any further.

Figure 6 shows an apparatus 70 in accordance with the invention for reading the information signal Vi recorded on the record carrier 40, elements corresponding to elements of the apparatus 50 shown in Figure 5 bearing the same reference numerals. In the apparatus 70 the reco rd carrier 40 on which the information signal Vi is recorded is scanned by a radiation beam 54a produced by a radiation source 53a. The intensity of the radiation beam 54a is too low to produce a change in the optical properties of the information layer 43, so that the information pattern already formed is not overwritten. The information pattern in the spiral groove with the radial wobble modulates and subsequently reflects the radiation beam 54a. The reflected and modulated radiation beam 54a is detected by a detection device 57a. The detection device 57a comprises a first section having an increased sensitivity to the modulation of the light beam produced by the radial wobble and a second section having an increased sensitivity to the modulation produced by the information pattern. Such a detection device is described in detail in the aforementioned Offenlegungsschrift no. 3100421. The signal generated by the first section of the detection circuit 57a is applied to a filter for removing frequency components produced by the radial wobble and by the velocity control, so that the information signal Vi becomes available on the output of the filter 71. In the same way as described with reference to Figure 5 the scanning velocity is controlled by means of a control circuit 59 and the position-information signal Ip is recovered by means of the FM demodulation circuit 71. Subsequently, the signal Ip may be used, for example, for locating specific portions of the record carrier or for displaying the playing time during reading of the recorded information.

In the foregoing the apparatus for recording information and the apparatus for reading the recorded information have been described as two separate apparatuses. It will be obvious to those skilled in the art that the two apparatuses may be readily combined to form a single apparatus both for recording and reading.

In the foregoing a track modulation in the form of a radial wobble has been provided for the purpose of scanning-velocity control in the reading and recording apparatus. It will be evident that other track modulations are also suitable for this purpose, for example those as described in German Offenlegungsschrift no. 3100278 (PHN 9667) and no. 3100421 (PHN 9666). In order to obtain a suitable track modulation care must be taken only that the scanning-beam modulation produced by the track modulation can be distinguished from the scanning-beam modulation caused by the information signal Vi and that the frequency components of these scanning-beam modulations are situated substantially outside the frequency band used for scanning-velocity control.

## Claims

1. An optically readable record carrier (40;80) comprising a radiation sensitive recording layer (43;84) upon a disc-shaped substrate (42;83) being provided with a continuous track (41;81) of constant width arranged in accordance with a spiral or concentric track pattern which record carrier is intended for the recording of information along the track with a substantial constant linear velocity, which track exhibits a periodic radial wobbling having a substantial constant spatial frequency, characterized in that the spatial frequency of the track wobbling is modulated with a digital position information signal (Ip), which position information does not exhibit strong frequency components in the low frequency range.

2. A record carrier as claimed in Claim 1, characterized in that the position information signal (Ip) indicates the time necesary for covering the distance from the beginning of the track pattern to the location where the position information is present when scanning is effected with the nominal velocity.

3. A record carrier as claimed in Claim 1, characterized in that the track is constituted by a ridge (81).

4. A record carrier as claimed in Claim 3, characterized in that the width of the ridges (81) is larger than the average width of the intermediate groove (86).

5. A method of manufacturing a record carrier as claimed in Claim 3, a master disc provided with a track pattern being obtained by scanning a substrate (4) provided with a radiation sensitive layer (5) with a radiation beam (7) along substantially concentric or spiral-shaped paths which exhibit a radial wobble, the scanned portions of the radiation sensitive layer being removed by subsequently developing the radiation sensitive layer (5) of the substrate, characterized in that the information layer is scanned along a path which is the complement of the desired path of the track on the record carrier to be manufactured, the record carrier with a track pattern which is the complement of the track pattern on the master disc being manufactured starting from the master disc.

6. An apparatus used in manufacturing a record carrier as claimed in any one of the Claims 1 to 4, comprising a writing device (6,16) for writing the track pattern on a carrier (4) provided with a radiation sensitive layer (5) by means of a radiation beam (7), a deflection device (10,30) for deflecting the radiation beam (7) in radial direction in response to a control signal (fc'), a device for generating as the control signal a periodic signal so as to obtain a track wobble whose frequency corresponds to the frequency of the periodic signal, characterized in that the apparatus comprising frequency modulating means (32) for frequency modulating the periodic signal with a digital position information (Ip) signal, which position information signal (Ip) does not exhibit strong frequency components in the low frequency range.

7. An apparatus as claimed in Claim 6, characterized in that the apparatus comprises means for generating a digital position information signal indicating the time necessary for covering the distance from the beginning of the track to the location where the digital position information is recorded when scanning is effected with the nominal velocity.

8. An apparatus for recording information on a record carrier (40,80) as claimed in any one of the Claims 1 to 4, comprising means (53,55,56) for scanning the record carrier along the track by means of a writing radiation beam (54) for recording in the scanned part of the record carrier (40) a pattern of recording marks corresponding to an information signal (Vi), an optical system with a detector (57) for detecting the radiation reflected or transmitted by the record carrier (40,80) during scanning, and which detector (57) is sensitive to the modulation of the radiation beam produced by the radial wobble, characterized in that the recording apparatus comprises an FM demodulation device (60) coupled to the detector (57) for recovering the position information signal from an output signal (fs) of the detector, and means (59) for controlling the scanned speed in dependence on the output signal (fs) and a reference signal (fref) indicating a reference frequency, so as to maintain the mean value of the frequency of the output signal (fs) substantially equal to the reference frequency (fref).

9. An apparatus for reading a record carrier as claimed in any one of the Claims 1 to 4, on which record carrier (40,80) an information pattern is recorded along the track, comprising a scanning device (53a) for scanning the information pattern with a substantially constant velocity by means of a radiation beam (54a), an optical system with a detector (57a) for detecting the radiation reflected or transmitted by the record carrier (40,80) during scanning, the detector (57a) having a first section with an increased sensitivity for the modulation of the radiation beam produced by the radial wobble of the track, the detector having a second section with an increased sensitivity to a modulation of the radiation beam produced by the information pattern recorded along the track, characterized in that the reading apparatus comprises an FM demodulation device (60) coupled to the first section of the detector for recovering the position information signal from an output signal of the said first section.

**Revendications**

1. Support d'enregistrement à lecture optique (40; 80) comportant une couche d'enregistrement sensible au rayonnement (43; 84) située sur un substrat en forme de disque (42; 83) pourvu d'une piste continue (41; 81) de largeur constante, disposée suivant une configuration de piste spirale ou concentrique, support d'enregistrement qui sert à enregistrer de l'information suivant une piste à une vitesse linéaire sensiblement constante, piste qui présente une ondulation radiale périodique ayant une fréquence spatiale sensiblement constante, caractérisé en ce que la fréquence spatiale de l'ondulation de piste est modulée par un signal numérique d'information de position (Ip), information de position qui ne présente pas de fortes composantes de fréquence dans la gamme de basses fréquences.

2. Support d'enregistrement selon la revendication 1, caractérisé en ce que le signal d'information de position (Ip) indique le temps nécessaire pour couvrir la distance entre le début de la configuration de piste et l'endroit où est prévue l'information de position si l'exploration est effectuée à la vitesse nominale.

3. Support d'enregistrement selon la revendication 1, caractérisé en ce que la piste est constituée par une nervure (81).

4. Support d'enregistrement selon la revendication 3, caractérisé en ce que la largeur des nervures (81) est supérieure à la largeur moyenne de la gorge intermédiaire (86).

5. Procédé de fabrication d'un support d'enregistrement selon la revendication 3, permettant d'obtenir un disque mère présentant une configuration de piste en explorant, au moyen d'un faisceau de rayonnement (7), un substrat (4) recouvert d'une couche sensible au rayonnement (5), suivant des trajets sensiblement concentriques ou spiralés présentant une ondulation radiale, les parties explorées de la couche sensible au rayonnement étant éliminées ensuite par développement de la couche de substrat sensible au rayonnement (5), caractérisé en ce que la couche d'information est explorée suivant un trajet qui est le complément du trajet souhaité de la piste sur le support d'enregistrement à fabriquer, le support d'enregistrement étant réalisé, à partir du disque mère, de façon à présenter une configuration de piste qui est le complément de la configuration de piste sur le disque mère.

6. Appareil utilisé dans la fabrication d'un support d'enregistrement selon l'une quelconque des revendications 1 à 4, comportant un dispositif d'écriture (6, 16) pour écrire, au moyen d'un faisceau de rayonnement (7), la configuration de piste sur un support (4) pourvu d'une couche sensible au rayonnement (5), un dispositif de déviation (10, 30) pour dévier, en réaction à un signal de commande (fc'), le faisceau de rayonnement (7) dans le sens radial, un dispositif pour engendrer comme signal de commande un signal périodique de façon à permettre d'obtenir une ondulation de piste dont la fréquence correspond à la fréquence du signal périodique, caractérisé en ce qu'il comporte des moyens de modulation de fréquence (32) pour moduler en fréquence le signal périodique par un signal numérique d'information de position (Ip), signal d'information de position (Ip) qui ne présente pas de fortes composantes de fréquence dans la gamme de basses fréquences.

7. Appareil selon la revendication 6, caractérisé en ce qu'il comporte des moyens pour engendrer un signal numérique d'information de position indiquant le temps nécessaire, lors de l'exploration à la vitesse nominale, pour couvrir la distance à partir du début de la piste jusqu'à l'endroit où est enregistrée l'information numérique de position.

8. Appareil d'enregistrement d'information sur un support d'enregistrement (40, 80) selon l'une quelconque des revendications 1 à 4, comportant des moyens (53, 55, 56) pour explorer le support d'enregistrement suivant la piste au moyen d'un faisceau de rayonnement d'écriture (54) pour enregistrer dans la partie explorée du support d'enregistrement (40) une configuration de marques d'enregistrement correspondant à un signal d'information (Vi), un système optique muni d'un détecteur (57) pour détecter le rayonnement réfléchi ou transmis par le support d'enregistrement (40, 80) au cours de l'exploration, détecteur (57) qui est sensible à la modulation du faisceau de rayonnement causée par l'ondulation radiale, caractérisé en ce qu'il comporte un dispositif de démodulation FM (60) couplé au détecteur (57) pour récupérer le signal d'information de position à partir d'un signal de sortie fs du détecteur, et des moyens (59) pour régler la vitesse explorée en fonction du signal de sortie (fs) et d'un signal de référence (fref) indiquant une fréquence de référence, de telle manière que la valeur moyenne de la fréquence du signal de sortie (fs) soit maintenue sensiblement égale à la fréquence de référence (fref).

9. Appareil de lecture d'un support d'enregistrement selon l'une quelconque des revendications 1 à 4, support d'enregistrement (40, 50) sur lequel une configuration d'information est enregistrée suivant la piste, comportant un dispositif d'exploration (53a) pour explorer la configuration d'information à une vitesse sensiblement constante au moyen d'un faisceau de rayonnement (54a), un système optique muni d'un détecteur (57a) pour détecter le rayonnement réfléchi ou transmis par le support d'enregistrement (40, 80) au cours de l'exploration, le détecteur (57a) présentant une première partie ayant une sensibilité accrue à la modulation du faisceau de rayonnement causée par l'ondulation radiale de la piste, et une seconde partie ayant une sensibilité accrue à une modulation du faisceau de rayonnement causée par la configuration d'information enregistrée suivant la piste, caractérisé en ce que l'appareil de lecture comporte un dispositif de démodulation FM (60) couplé à la première partie du détecteur pour récupérer le signal d'information de position à partir d'un signal de sortie de ladite première partie.

**Patentansprüche**

1. Optisch lesbarer Aufzeichnungsträger (40;80) mit einer strahlungsempfindlichen Aufzeichnungsschicht (43;84) auf einem scheibenförmigen Substrat (42;83), auf dem eine durchgehende Spur (41;81) konstanter Breite entsprechend einer Spirale oder einem konzentrischen Spurmuster angebracht ist, und der Aufzeichnungsträger zum Aufzeichnen von Information längs der Spur mit einer im wesentlichen konstanten linearen Geschwindigkeit dient, die Spur ein periodisches radiales Wobbeln mit einer im wesentlichen konstanten räumlichen Frequenz aufweist, dadurch gekennzeichnet, daß die räumliche Frequenz des Spurwobbelns mit einem digitalen Positionsinformationssignal (Ip) moduliert wird und diese Positionsinformation im niederen Frequenzbereich keine großen Frequenzkomponenten aufweist.

2. Aufzeichnungsträger nach Anspruch 1, dadurch gekennzeichnet, daß das Positionsinformationssignal (Ip) die erforderliche Zeit zum Zurücklegen des Abtands vom Spuranfang des Spurmusters zu der Stelle anzeigt, an der die Positionsinformation zur Verfügung steht, wenn die Abtastung bei Nenngeschwindigkeit erfolgt.

3. Aufzeichnungsträger nach Anspruch 1, dadurch gekennzeichnet, daß die Spur durch einen Rücken (81) gebildet wird.

4. Aufzeichnungsträger nach Anspruch 3, dadurch gekennzeichnet, daß die Breite der Rücken (81) größer ist als die mittlere Breite der Zwischenrille (86).

5. Verfahren zum Herstellen eines Aufzeichnungsträgers nach Anspruch 3, wobei eine Musterscheibe mit einem Spurmuster durch Abtasten eines Substrats (4) mit einer strahlungsempfindlichen Schicht (5) mittels eines Strahlungsbündels (7) aufim wesentlichen konzentrischen oder spiraligen Wegen erhalten wird, die ein radiales Wobbeln aufweisen, und die abgetasteten Teile der strahlungsempfindlichen Schicht durch folgendes Entwickeln der strahlungsempfindlichen Schicht (5) des Substrats entfernt werden, dadurch gekennzeichnet, daß die Informationsschicht entlang eines Wegs abgetastet wird, der das Komplement des gewünschten Weges der Spur auf dem herzustellenden Aufzeichnungsträger ist, wobei der Aufzeichnungsträger mit einem Spurmuster, das das Komplement des Spurmusters auf der Musterscheibe ist, ausgehend von der Musterscheibe hergestellt wird.

6. Gerät zur Verwendung bei der Herstellung eines Aufzeichnungsträgers nach einem der Ansprüche 1 bis 4, mit einer Schreibeinrichtung (6, 16) zum Beschreiben eines mit einer strahlungsempfindlichen Schicht (5) versehenen Trägers (4) mit dem Spurmuster mittels eines Strahlungsbündels (7), mit einer Ablenkeinrichtung (10, 30) zum Ablenken des Strahlungsbündels (7) in radialer Richtung in Beantwortung eines Steuersignals (fc'), mit einer Einrichtung zum Erzeugen eines periodischen Signals als des Steuersignals zum Erhalten eines Spurwobbelns, dessen Frequenz der Frequenz des periodischen Signals entspricht, dadurch gekennzeichnet, daß das Gerät Frequenzmodulationsmittel (32) zum Frequenzmodulieren des periodischen Signals mit einem digitalen Positionsinformationssignal (Ip) enthält, das im niederen Frequenzbereich keine großen Frequenzkomponenten aufweist.

7. Gerät nach Anspruch 6,
dadurch gekennzeichnet, daß es Mittel zum Erzeugen eines digitalen Positionsinformationssignal enthält, das die erforderliche Zeit zum Zurücklegen des Abstands vom Spuranfang zu der Stelle anzeigt, an der die digitale Positionsinformation aufgezeichnet wird, wenn die Abtastung bei Nenngeschwindigkeit erfolgt.

8. Gerät zum Aufzeichnen von Information aufeinem Aufzeichnungsträger (40, 80) nach einem der Ansprüche 1 bis 4, mit Mitteln (53, 55, 56) zum Abtasten des Aufzeichnungsträgers entlang der Spur mittels eines SchreibStrahlungsbündels (54) zum Aufzeichnen eines Musters von Aufzeichnungsmarken entsprechend eines Informationssignals (Vi), mit einem optischen System mit einem Detektor (57) zum Detektieren der vom Aufzeichnungsträger (40, 80) beim Abtasten zurückgeworfenen oder übertragenen Strahlung, wobei der Detektor (57) für die vom radialen Wobbeln erzeugte Modulation des Strahlungsbündels empfindlich ist, dadurch gekennzeichnet, daß das Aufzeichnungsgerät eine FM-Demodulationseinrichtung (60), die zum Wiedergewinnen des Positionsinformationssignals aus einem Ausgangssignal (fs) des Detektors mit dem Detektor (57) gekoppelt ist, und Mittel (59) zum Steuern der abgetasteten Geschwindigkeit in Abhängigkeit vom Ausgagssignal (fs) und von einem eine Bezugsfrequenz anzeigenden Bezugssignal (fref) enthält, um der mittlere Wert der Frequenz des Ausgangssignals (fs) im wesentlichen gleich der Bezugsfrequenz (fref) zu halten.

9. Gerät zum Auslesen eines Aufzeichnungsträgers nach einem der Ansprüche 1 bis 4, auf dem (40, 80) ein Informationsmuster längs der Spur aufgezeichnet ist, mit einer Abtasteinrichtung (53a) zum Abtasten des Informationsmusters bei einer im wesentlichen konstanten Geschwindigkeit mittels eines Strahlungsbündels (54a), mit einem optischen System mit einem Detektor (57a) zum Detektieren der vom Aufzeichnungsträger (40, 80) beim Abtasten zurückgeworfenen oder übertragenen Strahlung, wobei der Detektor (57a) einen ersten Abschnitt mit erhöhter Empfindlichkeit für die vom radialen Wobbeln der Spur erzeugten Modulation des Strahlungsbündels und einen zweiten Abschnitt mit erhöhter Empfindlichkeit für eine Modulation des Strahlungsbündels enthält, die das längs der Spur aufgezeichnete Informationsmuster erzeugt,
dadurch gekennzeichnet, daß das Lesegerät eine FM-Demodulationseinrichtung (60) enthält, die mit dem ersten Abschnitt des Detektors zum Wiedergewinnen des Positionsinformationssignals aus einem Ausgangssignal des ersten Abschnitts gekoppelt ist.

FIG.1

FIG. 2

FIG. 3

FIG. 4a

FIG. 4b

FIG. 5

FIG. 6

FIG. 7B

FIG. 7A

FIG. 8